# FASCICULE DE BREVET EUROPEEN

(11) **EP 3 519 748 B1**
(45) Date de publication et mention de la délivrance du brevet: **05.11.2025**
(21) Numéro de dépôt: 17761293.4
(22) Date de dépôt: 07.09.2017
(51) Int. Cl.: F27B 5/04, F27B 5/06, F27B 17/02, F27D 11/06

(54) **FOUR A INDUCTION TOUT METAL A HAUTE TEMPERATURE, DESTINE A FONDRE DES ECHANTILLONS DE MINERAUX ET/OU DE ROCHES POUR L'EXTRACTION DES GAZ SOUS ULTRAVIDE**
HOCHTEMPERATUR-VOLLMETALLINDUKTIONSOFEN ZUM SCHMELZEN VON PROBEN VON MINERALIEN UND/ODER GESTEINEN ZUM EXTRAHIEREN VON GASEN UNTER ULTRAHOCHVAKUUM
HIGH-TEMPERATURE ALL-METAL INDUCTION FURNACE, INTENDED TO MELT SAMPLES OF MINERALS AND/OR ROCKS FOR EXTRACTING GASES UNDER ULTRA-HIGH VACUUM

(30) Priorité: 27.09.2016 FR 1659142
(43) Date de publication de la demande: 07.08.2019
(73) Titulaire: Centre National de la Recherche Scientifique, 75016 Paris (FR)
(72) Inventeur: ZIMMERMANN, Laurent, 54210 Saint Nicolas de Port (FR); BLARD, Pierre-Henri, 54130 Saint Max (FR)
(74) Mandataire: Ipsilon
(86) Numéro de dépôt international: PCT/EP2017/072476
(87) Numéro de publication internationale: WO 2018/059902

(56) Documents cités:
- EP-A1- 3 029 165
- FR-A- 1 209 469
- FR-A- 1 595 662
- GB-A- 1 521 231
- GB-A- 2 217 159
- US-A- 3 300 564

## Description

### Domaine technique

La présente invention concerne le domaine de l'extraction des gaz rares présents dans des minéraux et/ou roches.

Elle concerne plus particulièrement un four fonctionnant par chauffage à induction électromagnétique, à haute température (HT) et sous ultra vide (UHV). Par « haute température », on comprend ici et dans le cadre de l'invention, des températures maximales du four d'au moins 1500°C, typiquement aux environs de 1800°C. Par «ultra vide », on comprend ici et dans le cadre de l'invention, des pressions à l'intérieur de l'enceinte du four de 10⁻⁸ à 10⁻⁹ mbar, typiquement une pression de l'ordre de 5x10⁻⁸ mbar à 800°C.

Elle vise plus particulièrement à améliorer les performances des fours HT sous UHV existants et autres systèmes d'extraction connus constitués par des lasers.

### Art antérieur

Les gaz rares, encore appelés gaz nobles, sont des éléments chimiques appartenant au groupe « 0 » du tableau périodique. Ce sont, dans les conditions normales de température et de pression (273 K, 1 atm), des gaz monoatomiques de symboles respectifs He (Hélium), Ne (Néon), Ar (Argon), Kr (Krypton) et Xe (Xénon). Leurs couches électroniques externes saturées, à deux électrons pour He et à huit pour Ne-Ar-Kr et Xe, leur confèrent une caractéristique physique particulière, à savoir une inertie chimique vis-à-vis des autres éléments. Ils sont, par cette singularité, considérés comme d'excellents traceurs géochimiques et des géochronomètres de premier plan. Chaque gaz rare possède plusieurs isotopes : deux pour l'hélium (³⁻⁴He); trois pour le néon (²⁰⁻²¹⁻²²Ne) et l'argon (³⁶⁻³⁸⁻⁴⁰Ar); six pour le krypton (⁷⁵⁻⁸⁰⁻⁸²⁻⁵³⁻⁸⁴⁻⁸⁶Kr) et enfin neuf pour le xénon (¹²⁴⁻¹²⁶⁻¹²⁸⁻¹²⁹⁻¹³⁰⁻¹³¹⁻¹³²⁻¹³⁴⁻¹³⁶Xe).

La composition élémentaire et isotopique de ces gaz n'a cessé d'évoluer depuis l'accrétion de la terre, il y a 4.56 milliards d'années par des réactions nucléaires qu'elles soient de nature radiogénique (radioactivité), nucléogénique (réactions nucléaires) ou encore cosmogénique (production d'isotopes par interactions avec le rayonnement cosmique).

Par ailleurs, l'ensemble des réservoirs terrestres contenant les gaz rares (atmosphère, croûte et manteau superficiel et profond) ont vu leurs compositions élémentaires et isotopiques se modifier également suite :
- au dégazage;
- à la différentiation du manteau;
- aux fuites (hélium) dans l'espace au niveau de la haute atmosphère ;
- à l'activité humaine depuis la révolution industrielle (apport dans l'atmosphère d'hélium radiogénique suite à l'exploitation des énergies fossiles (charbon, gaz, pétrole) et apport tritiogénique suite aux essais nucléaires dans l'atmosphère qui ont généré du ³He par décroissance de ³H).

Etudier et comprendre les interactions fluides-roches au niveau de la croûte et/ou du manteau est un défi majeur en géoscience et nécessite des outils performants pour extraire, des roches et/ou des minéraux, les gaz rares afin d'accéder aux informations géochimiques nécessaires à la compréhension des processus cités ci-dessus.

Plusieurs techniques d'extraction sont connues : on pourra se reporter à la publication [1] qui fait un inventaire des techniques les plus utilisées dans les laboratoires de recherches qui permettent d'accéder aux gaz rares piégés dans les roches et les minéraux.

Une des techniques consiste à chauffer des échantillons afin d'extraire les gaz rares contenus.

L'extraction des gaz rares par chauffage des échantillons a toujours été un défi majeur à résoudre dans le domaine des géosciences. Elle nécessite des outils performants pour répondre favorablement aux exigences des laboratoires, à savoir extraire à haute température les gaz piégés dans les roches ou dans les minéraux, le plus rapidement possible dans une enceinte sous ultravide où le dégazage des gaz rares issu des surfaces internes est négligeable.

On peut classer en plusieurs catégories les systèmes d'extraction par chauffage utilisés actuellement par la communauté scientifique pour faire l'extraction mentionnée : les fours résistifs soit à double paroi, soit à simple paroi, les fours à ampoule, les fours à chauffage par induction électromagnétique dont l'enceinte est en verre et enfin les lasers. Tous ces systèmes connus sont associés à une ligne de purification et à un spectromètre de masse.

Les fours résistifs à double paroi sont issus d'une technologie des années 1980 très répandue dans les laboratoires : voir par exemple publication [2], [3].

Ce sont des fours qui utilisent un courant électrique pour chauffer par effet Joule une résistance le plus souvent en tungstène.

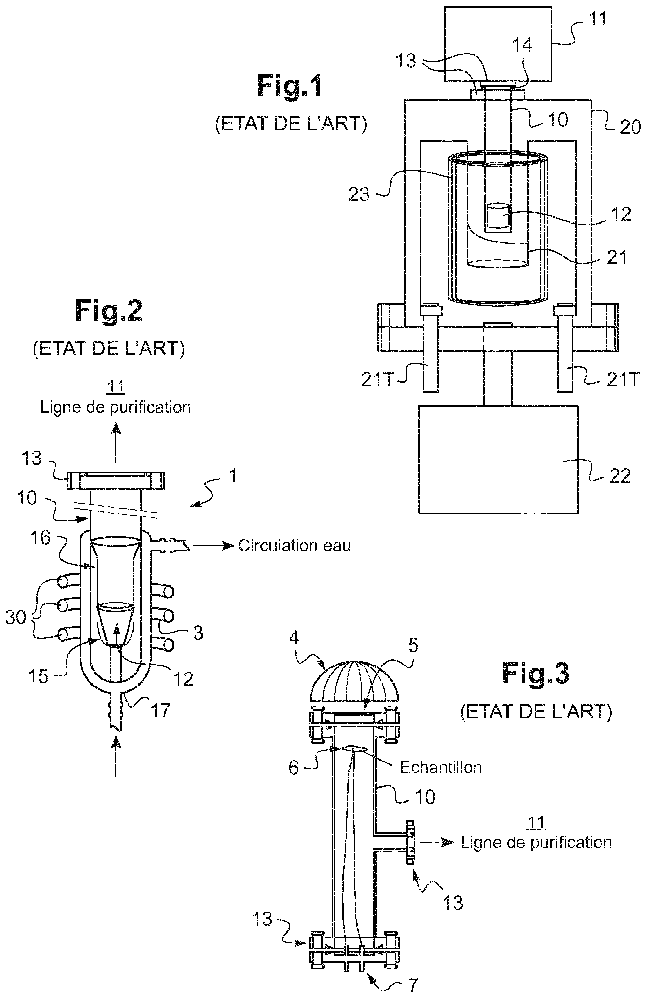

On a représenté en figure 1, un tel four HT sous UHV à double paroi comprenant deux enceintes 10 et 20 indépendantes qui ne communiquent pas entre elles.

La première enceinte est l'enceinte externe 20 dans laquelle une résistance en tungstène 21 alimentée depuis l'extérieur par des traversées électriques 21T, est chauffée par effet Joule.

Les radiations émises par celle-ci permettent de chauffer à haute température une seconde enceinte qui est un tube en tantale (Ta) 10, relié à une ligne de purification sous ultravide 11 pour purifier les gaz qui sont extraits d'un échantillon chauffé dans un creuset 12 en métal, tel qu'en Molybdène (Mo), en tantale (Ta), en oxyde de magnésium (MgO), en alumine (Al₂O₃) ou en nitrure de bore (BN). Les échantillons présents dans le creuset peuvent être ainsi fondus à des températures typiquement comprises entre 1600 et 1800°C.

La ligne de purification sous ultra-vide (UHV) 11 comprend des pièges d'adsorption chimique (chimisorption) et physique (physisorption) pour purifier le gaz extrait. La chimisorption permet le piégeage de toutes les espèces réactives (H₂O, CO₂, CxHy, ...). La physisorption, utilisée généralement après la chimisorption permet la séparation des gaz rares en fonction de leur température de condensation à basse température sur une surface (charbon actif par exemple).

L'enceinte externe 20 est reliée par l'intermédiaire d'une bride non représentée à un groupe de pompage turbo moléculaire 22, dédié à l'évacuation des gaz, notamment l'oxygène, à l'intérieur de l'enceinte externe 20, afin d'éviter d'endommager par oxydation la résistance chauffante 21.

Le principal avantage de ce type de four à double paroi demeure son système de double enceinte sous vide qui facilite la purification des gaz rares extraits. En effet, le dihydrogène (H₂) produit à chaud par la résistance en Tungstène, et qui pourrait dégrader l'efficacité des pièges d'adsorption chimique utilisés dans la ligne de purification 11, est pompé par le groupe de pompage 22.

Cependant, ce type de four HT sous UHV de l'état de la technique présente de nombreux inconvénients que l'on peut résumer comme suit.

Le tube en tantale 10 est massif avec une masse importante de Ta. Celui-ci contient naturellement de grandes quantités de gaz rares d'origine atmosphérique, qui par diffusion à haute température viennent entacher les mesures de gaz rares issus des échantillons. Le dégazage de ce tube en tantale est obligatoire pour réduire la diffusion des gaz rares d'origine atmosphérique dans l'enceinte d'extraction 20. Cette opération est souvent longue et fastidieuse.

En outre, la vitesse de chauffe du creuset 12 est freinée par le tube en tantale qui va dans un premier absorber les radiations émises par la résistance pour monter en température. Le creuset est ensuite chauffé par conduction pour atteindre les températures cibles, i.e. entre 1600 et 1800°C. Un temps d'environ 15 à 20 minutes est nécessaire pour atteindre ces températures. L'inertie thermique de l'importante masse métallique, constituée du creuset et du tube en Ta typiquement de 700 à 800g, est également un frein à un refroidissement rapide du four. 15 à 20 minutes sont également nécessaires pour refroidir le tube en tantale à une température inférieure à 500°C.

L'étanchéité entre le tube en Ta et la ligne de purification est délicate à obtenir et demeure souvent une source de fuites. Cette étanchéité se fait à l'aide de deux brides plates 13 entre lesquelles un joint en or 14 est écrasé. Ce mode de connexion est onéreux par le simple fait d'utiliser un joint en or. Il est difficile à mettre en œuvre car le positionnement du joint en or par rapport aux brides 13 est délicat. Celui-ci aurait en effet tendance à générer des fuites.

Par ailleurs, le tube en Ta recristallise sous l'effet de la chaleur. Un pompage partiel (ou total) des gaz rares extraits des échantillons dans l'enceinte 10 vers la deuxième enceinte 20 peut se produire à travers les fissures issues de la recristallisation du tube par le biais du groupe de pompage secondaire 22. Ce phénomène a été fréquemment observé. Il donne des résultats erronés car il sous-estime, par définition les concentrations des gaz rares mesurés.

De plus, le tube en Ta est régulièrement endommagé suite à la fusion des silicates présents dans les échantillons. Les alliages produits entre le tantale et les silicates fondus ont pour effet de réduire la durée de vie du tube en tantale. La multiplication des cycles de chauffage à hautes températures a pour effet de faire fluer le tantale vers la base du tube qui se déforme en se bombant. Cette déformation peut s'avérer dangereuse pour l'intégrité du four. Le remplacement périodique du tube en Ta a un coût important, typiquement de l'ordre de 1500 Euros (€) par tube. Il nécessite le démontage complet du four avec le risque de détériorer les coûteuses résistances en W et les écrans thermiques.

Comme évoqué ci-dessus, la première enceinte 20 nécessite un groupe de pompage secondaire dédié afin de préserver les résistances d'une oxydation avec l'oxygène de l'air (destruction des résistances). Ce groupe de pompage est un surcoût pour cette méthode d'extraction ; qui peut se chiffrer typiquement aux environs de 5 000 €. La maintenance du groupe de pompage est également à prendre en compte dans son financement, avec un coût d'environ 1500 € par maintenance.

Ainsi, le coût total d'un four HT sous UHV de type à double paroi est très élevé non seulement à l'achat, typiquement estimé par les inventeurs à environ 80 000 € pour un four clé en main, mais également du fait de la maintenance requise.

Pour supprimer les problèmes liés au tube en tantale utilisé dans les fours à double paroi, les inventeurs de la présente invention ont réalisé un four à paroi unique, comme décrit dans la demande de brevet FR2973105.

En substance, dans ce four à paroi unique, un creuset d'extraction des gaz et une résistance chauffante sont dans la même enceinte sous UHV. Un courant électrique chauffe par effet Joule une résistance en tantale dans laquelle est inséré le creuset recevant l'échantillon, qui est en nitrure de bore. Le creuset est ensuite chauffé jusqu'à environ 1400-1450°C par radiation.

Si ce four à paroi unique est globalement satisfaisant, il présente néanmoins plusieurs inconvénients comme suit.

Tout d'abord, la température maximale que peut atteindre le four est limitée à environ 1400-1450°C. Il n'est pas adapté pour fondre des échantillons réfractaires comme les olivines qui nécessitent une température de 1700°C-1800°C pour leur fusion. L'extraction des gaz dans des échantillons réfractaires comme les olivines peut toutefois se faire par diffusion. La granulométrie des échantillons ne doit cependant pas être trop grossière sous peine d'augmenter drastiquement le temps d'extraction. Une granulométrie supérieure à la fraction 300-500 µm ne permet pas d'obtenir un rendement d'extraction satisfaisant.

Ensuite, la résistance chauffante est soumise à de fortes contraintes mécaniques au cours du chauffage qui la fragilisent. Son intégrité peut être préservée en augmentant progressivement la puissance électrique, mais au détriment d'un chauffage rapide. Ainsi, une durée de 20 à 30 minutes est préconisée pour atteindre la température maximale. On constate malgré tout que cette résistance chauffante est détruite après 40 à 50 cycles en moyenne. Ceci implique un coût de fonctionnement lié à son remplacement qui n'est pas négligeable puisqu'il est de l'ordre de 350 € par résistance.

Par ailleurs, l'état de surface des fixations de la résistance chauffante sur les traversées électriques doit être particulièrement soigné sous peine de diminuer la température atteinte par le four.

Enfin, les creusets en nitrure de bore présentent une relative inertie chimique vis à vis des éléments présents dans les minéraux. Il dégaze toutefois d'importantes quantités d'azote à haute température. L'emploi de creuset en Ta ou en Mo ne permet pas d'atteindre 1450°C avec ce type de four.

Les fours à chauffage par induction électromagnétique sont également mis en œuvre pour l'extraction de gaz rares dans des échantillons: voir notamment publication [4] [5].

Un tel four à induction est représenté en figure 2. Un creuset métallique 12 destiné à recevoir les échantillons est porté par un support adapté en silice 15 et maintenu dans une enceinte en verre 10 à double-paroi. Cette dernière est connectée à une ligne de purification 11 des gaz à l'aide d'une bride 13 de type CF. Un tube 16 qui permet le guidage de l'échantillon jusqu'au creuset métallique 12 est agencé sur le dessus de ce dernier. Le creuset métallique est le siège de courants électriques induit lorsqu'il est soumis à un champ magnétique variable fourni par un inducteur 3 dont les spires 30 à l'extérieur de l'enceinte 10, entourent le creuset 12 sur toute sa hauteur. Une circulation d'eau dans la double-paroi 17 de l'enceinte 10 permet d'assurer le refroidissement du four. Les courants induits dans le creuset métallique 12 permettent d'obtenir une élévation rapide de sa température jusqu'à 1800°C voire 2000°C si nécessaire.

Les principaux inconvénients de ce four à induction sont liés à l'utilisation du verre pour l'enceinte. En effet, l'hélium atmosphérique va diffuser à travers la paroi de l'enceinte car le verre est un matériau poreux vis à vis de cet élément. Les quantités résiduelles d'hélium détectées dans ce type d'enceinte sont donc par définition importantes, comme mis en exergue dans les publications [4] et [16], et ne permettent donc pas une analyse des échantillons pauvres en ce gaz. Il n'est pas possible de remplacer l'enceinte en verre par une enceinte en métal du fait de l'agencement des spires d'induction 30 à l'extérieure de celle-ci.

En outre, le creuset métallique 12 repose sur un porte-creuset 15 qui est en silice. Les différences de dilation thermique entre le métal et la silice sont à l'origine des fracturations observées du porte creuset au cours des cycles de chauffage. Pour minimiser l'importance de celles-ci, il est préconisé de chauffer et de refroidir lentement le creuset, ce qui est contradictoire avec une montée en température très rapide du four. Typiquement, une durée de 1 heure environ est nécessaire pour chauffer le creuset afin qu'il atteigne une température de 1800°C.

Enfin, les dimensions du creuset sont très réduites. Son volume de 2.7cm³ ne permet pas de fondre d'importantes quantités d'échantillons

Les fours à ampoule ont été également utilisés pour l'extraction des gaz rares: voir publication [6]. On a représenté en figure 3, un tel four à ampoule : il fonctionne grâce à une lampe halogène 4 dont le confinement de la lumière dans une enceinte 10 sous UHV permet de chauffer par radiation une feuille métallique 6 dans laquelle se trouve un échantillon sous la forme d'une poudre ou de minéraux. La lumière est transmise à l'intérieur de l'enceinte grâce à un hublot 5. La température est mesurée avec un thermocouple 7 fixé sur une traversée spécifique. Celle-ci est soudée sur une bride 13 de type CF en bout d'enceinte 10. L'enceinte 10 est connectée à une ligne de purification 11 des gaz à l'aide d'une autre bride 13 de type CF.

Le principal inconvénient des fours à ampoule est la température maximale atteinte qui ne peut dépasser 900 à 1000°C. Ces températures sont insuffisantes pour l'extraction des gaz rares présents dans des échantillons de roches et/ou minéraux.

Outre tous les fours HT sous UHV connus, décrits ci-avant, les lasers de type à CO_{2,} à diode et Nd-Yag (acronyme du nom anglais « Neodymium-doped Yttrium aluminium garnet ») sont de très bons outils d'extraction des gaz. Ils permettent en effet de fondre rapidement un échantillon en focalisant à sa surface l'énergie d'un faisceau laser. Cette technique semble adaptée uniquement à l'analyse de petits échantillons dont la masse est comprise entre 0,1g et 150 mg : voir publications [7] et [8]. Elle serait de ce fait plutôt réservée aux échantillons riches en gaz.

Il existe donc un besoin d'améliorer l'extraction des gaz rares présents dans des échantillons de roches et/ou minéraux, notamment afin de pallier les inconvénients des systèmes d'extraction selon l'état de l'art tels que présentés en préambule, en particulier en vue d'améliorer les performances d'extraction, de permettre une extraction et une analyse efficaces à partir d'échantillons pauvres en gaz, de permettre une montée en température rapide et ce jusqu'à des hautes températures d'au moins 1800°C, de permettre un refroidissement rapide de l'échantillon après sa fusion, de permettre une maintenance aisée en état de fonctionnement, tout en réduisant les coûts liés à la fabrication et à la maintenance.

Fours d'induction industrielles sous vide sont connues par exemple de US 3300564A ou EP3029165A.

Le but de l'invention est de répondre au moins en partie à ce besoin.

### Exposé de l'invention

Pour ce faire, l'invention concerne, sous l'un de ses aspects, un four à haute température sous ultravide, destiné à l'extraction de gaz rares présents dans des échantillons de minéraux et/ou de roches, comprenant :
- une enceinte métallique et étanche, notamment aux gaz atmosphériques, comprenant dans sa partie supérieure une ouverture de connexion à une ligne de purification des gaz libérés dans l'enceinte et/ou à un dispositif d'amenée par gravité d'un échantillon et, une ouverture de connexion à une pompe adaptée pour créer l'ultravide à l'intérieur de l'enceinte,
- un creuset en matériau électriquement conducteur, adapté pour contenir au moins un échantillon de minéraux et/ou de roches,
- un support en matériau isolant électrique, en appui sur la partie inférieure de l'enceinte métallique, et supportant le creuset à une certaine hauteur dans l'enceinte,
- au moins une bobine d'induction, alimentée électriquement depuis l'extérieur de l'enceinte par au moins une traversée isolée traversant une paroi de l'enceinte, et agencée dans l'enceinte autour du creuset,
- un tube en matériau isolant électrique, en appui sur la partie inférieure de l'enceinte métallique, agencé entre la bobine d'induction et le creuset supporté par le support.

Ainsi, l'invention consiste essentiellement à fournir un four HT sous UV dont l'enceinte unique est métallique dans laquelle un creuset conducteur électrique, de préférence en tantale, est posé sur un support isolant, de préférence une céramique, et chauffé par induction par une bobine enroulé autour. Le tube isolant, de préférence en quartz, agencé entre la bobine d'induction et le creuset, permet avantageusement de servir de surface sur laquelle les espèces condensables peuvent venir se condenser. Le tube isolant en quartz permet surtout de protéger la bobine d'induction. En effet, d'importantes quantités de matière issues des échantillons sont vaporisées dans le four. Si celles-ci venaient à se condenser sur la bobine, elles combleraient l'espacement entre les spires de la bobine d'induction qui finiraient par se toucher. La conséquence de ce phénomène serait probablement un court-circuit qui induirait probablement une baisse de la température du creuset.

Le four selon l'invention permet de résoudre tous les problèmes d'extraction rencontrés dans les laboratoires de recherches pour extraire rapidement et dans des conditions analytiques satisfaisantes les gaz rares piégés dans les échantillons géologiques (roches totales, minéraux séparés).

Le four selon l'invention présente en outre de nombreuses caractéristiques et avantages par rapport à l'ensemble des techniques d'extraction utilisées jusqu'à ce jour dans les laboratoires de recherches, que l'on peut résumer comme suit.

Tout d'abord, l'enceinte unique du four est métallique. Cela permet de l'étuver jusqu'à 200°C minimum pour dégazer les parois internes de l'enceinte. Elle est par définition non perméable aux gaz rares d'origine atmosphérique. Un four à enceinte métallique permet de s'affranchir des problèmes rencontrés avec les fours à induction à enceinte en verre selon l'état de l'art, à savoir une fragilité de la structure vis à vis du creuset lorsque ce dernier est chauffé mais, surtout une porosité des parois vis à vis de l'hélium. Cette porosité contribue en effet à introduire dans l'enceinte des fours à induction à enceinte en verre, d'importantes quantités d'hélium d'origine atmosphérique qui entachent les mesures d'une incertitude supplémentaire. Cette apport peut représenter jusqu'à plus de 99% de l'hélium total mesuré.

Ensuite, le chauffage du four selon l'invention est de type inductif. Cela permet d'atteindre des températures supérieures à 1800°C. De ce fait, le four selon l'invention surclasse ainsi en termes de puissance de chauffe les fours à simple paroi à chauffage résistif selon l'état de l'art et les fours à lampe selon l'état de l'art, comme présentés dans l'art antérieur qui ne peuvent atteindre que 1400°C et 1000°C respectivement.

Dans le four selon l'invention, le creuset de préférence en tantale est posé sur un support isolant, de préférence une céramique. Cela permet d'éviter des problèmes liés au tube en tantale utilisé dans les fours à double paroi selon l'état de l'art, à savoir une recristallisation des parois du tube qui induit un pompage partiel ou total des gaz extraits par le groupe de pompage secondaire utilisé pour ce type de four et à une sous-estimation des concentrations en gaz rares calculées. Cela permet également l'absence de contraintes mécaniques et thermiques au niveau du creuset car celui-ci repose simplement sur le support isolant, de préférence en céramique.

L'effet du chauffage inductif combiné à l'absence de contraintes mécaniques et thermiques au niveau du creuset permet d'atteindre une vitesse de chauffage très élevée, à savoir moins de 5 minutes pour atteindre 1800°C. Son refroidissement est tout aussi rapide. Actuellement, il n'existe pas au niveau international des fours de laboratoire, que ce soit des fours résistifs à simple paroi, à double paroi, des fours à ampoule, ou encore des fours à chauffage par induction dont l'enceint en verre, qui présentent ces caractéristiques. Le gain de temps au niveau du chauffage, estimé par les inventeurs à environ 15 à 20 minutes par extraction, améliore indéniablement la qualité de l'extraction des gaz rares des échantillons en diminuant notamment les blancs en gaz rares.

Les caractéristiques du four selon l'invention (température maximale, vitesse de chauffage et de refroidissement, blanc analytique) sont fiables et reproductibles dans le temps.

En outre, la vitesse de dégazage du creuset est rapide, quelques heures à 1800°C suffisent. Il en va de même avec les parois de l'enceinte métallique, typiquement à 200°C. Cela permet d'obtenir rapidement des conditions analytiques très satisfaisantes, à savoir des quantités résiduelles de gaz rares d'origine atmosphérique dans l'enceinte très faibles et donc négligeables vis à vis de celles extraites d'un échantillon. Les premiers résultats concernant l'hélium et le néon place le four selon l'invention parmi les fours les plus performants en terme de blanc analytique. Ceci s'explique par la température très élevée obtenue par, d'au moins 1800°C et par la faible masse du creuset à dégazer, typiquement de l'ordre de 120g. Ce même dégazage est beaucoup plus long avec un four à induction en verre selon l'état de l'art du fait d'une vitesse de montée en température beaucoup plus longue afin de minimiser les effets thermiques sur le porte creuset. Cela est également vrai avec un four résistif à double paroi selon l'état de l'art, du fait de la masse du tube en tantale importante, typiquement de l'ordre de 700g et de la vitesse de chauffe plus longue. Cela est enfin vrai avec un four à simple paroi selon l'état de l'art, du fait d'une température de dégazage du creuset plus faible (1400°C).

Par ailleurs, certains échantillons géologiques présentent des concentrations en gaz très faibles. Cette caractéristique impose jusqu'à présent de fondre d'importantes quantités d'échantillons, afin d'extraire suffisamment de gaz rares pour les détecter. Le creuset selon l'invention peut avoir un volume important, typiquement de l'ordre de 15cm³. Ce volume possible est jusqu'à cinq fois plus important que celui proposé par les creusets utilisés dans les fours à induction en verre selon l'état de l'art. Ainsi, ce volume possible important pour le creuset selon l'invention permet d'envisager de fondre d'importantes quantités d'échantillon, typiquement 1 à 2 g par échantillon, afin d'analyser les échantillons pauvres en gaz. Cette caractéristique n'est par exemple pas accessible aux techniques utilisant un laser comme moyen de chauffage, qui sont de fait limitées de par le diamètre du faisceau laser, à fondre uniquement quelques dizaines de milligramme d'échantillon par analyse. Et, pour des raisons de coût exorbitant, il n'est pas conseillé d'utiliser des lasers de forte puissance présentant une surface, au point focal, suffisamment importante pour fondre 1 à 2 g d'échantillon.

Par ailleurs, le changement du creuset est très facile, car il repose uniquement sur un support isolant, de préférence une céramique. Le changement du creuset dans les fours résistifs à double paroi selon l'état de l'art est beaucoup plus compliqué, car cela nécessite le démontage du tube en tantale avec le risque de casser accidentellement les résistances chauffantes dont le coût de remplacement est très élevé. Il est estimé à plus de 12 000 €.

Le coût de maintenance du four selon l'invention est très faible, puisqu'il consiste uniquement en un remplacement du creuset. Typiquement, le coût d'un creuset en tantale s'élève à 285 €. Par comparaison, le coût de maintenance des fours résistifs à simple paroi est plus élevé, car il comprend d'une part le changement du creuset, actuellement de l'ordre de 50 € et d'autre part le remplacement périodique de la résistance chauffante, estimé à 350 €. Le coût de maintenance des fours résistifs à double paroi est encore plus élevé car il comprend le changement du tube en tantale, estimé à 1 500 € et la maintenance du groupe de pompage, qui s'élève à environ 1 500 € par révision.

Enfin, le coût global pour la mise au point du four selon l'invention muni d'un générateur de signaux HF est tout à fait acceptable à des fins de commercialisation. Comparé aux fours résistifs à double paroi et aux techniques utilisant un laser (CO₂, diode, etc.) comme moyen de chauffe, les inventeurs estiment en première approche que le coût d'un four selon l'invention, peut être jusqu'à 2 à 4 fois moins onéreux.

Selon un mode de réalisation avantageux, le four comprend un circuit de refroidissement à fluide caloporteur intégré dans les parois latérale, inférieure et supérieure de l'enceinte. De préférence, le fluide caloporteur est de l'eau.

Selon une variante avantageuse, l'enceinte métallique est constituée de cylindres assemblés entre eux par soudure et brides de fixation. De préférence, les cylindres et brides de fixation sont en acier inoxydable, de préférence respectivement de type 304L et 316LN.

Selon une autre variante avantageuse, la distance entre la bobine d'induction et chacune des parois internes inférieure, supérieure et latérale est au moins égale à 10 mm.

Le creuset conducteur est de préférence en un matériau choisi parmi le tantale (Ta), le molybdène (Mo), le platine (Pt), le fer (Fe). De fait, tous les creusets en métal peuvent convenir dans le cadre de l'invention.

Le support isolant électrique est de préférence en un matériau choisi parmi une céramique, le quartz. En pratique, tous les matériaux non conducteurs électriques peuvent convenir.

De préférence encore, le tube isolant électrique est en un matériau choisi parmi le quartz, la vitrocéramique, le carbone vitreux. D'autres matériaux isolants électriques peuvent convenir.

Selon un mode de réalisation avantageux, l'ouverture de connexion est reliée à une pièce de dérivation pour connecter la partie supérieure de l'enceinte à la fois à la ligne de purification des gaz et à un carrousel de stockage en tant que dispositif d'amenée par gravité d'un échantillon.

Le four selon l'invention peut présenter également l'une et/ou l'autre des caractéristiques avantageuses suivantes :
- l'extrémité inférieure du support isolant électrique est logée avantageusement dans un guide de centrage réalisé dans la paroi interne inférieure de l'enceinte ;
- l'extrémité inférieure du tube isolant électrique est logée dans un guide de centrage réalisé dans la paroi interne inférieure de l'enceinte ;
- l'extrémité supérieure du tube isolant électrique est agencée au plus près de la paroi interne supérieure de l'enceinte.

### Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :
- la figure 1 est une vue schématique en coupe longitudinale d'un four HT sous UHV de type résistif à double-paroi selon l'état de l'art ;
- la figure 2 est une vue schématique en coupe longitudinale d'un four HT sous UHV de type à chauffage par induction électromagnétique dans une enceinte en verre selon l'état de l'art ;
- la figure 3 est une vue schématique en coupe longitudinale d'un four HT sous UHV de type à ampoule selon l'état de l'art ;
- la figure 4 est une vue schématique en coupe longitudinale d'un four HT sous UHV de type à chauffage par induction électromagnétique selon l'invention ;
- les figures 5 et 5A sont des vues respectivement en coupe longitudinale et de dessus de la partie inférieure du four selon la figure 4 ;
- les figures 6 et 6A sont des vues respectivement en coupe longitudinale et de dessus de la partie supérieure du four selon la figure 4 ;
- la figure 7 illustre, sous forme de courbe, l'évolution de la température du creuset d'un four selon l'invention en fonction des réglages du générateur d'induction ;
- la figure 8 illustre, sous forme de courbe, la vitesse de chauffe et de refroidissement du creuset d'un four selon l'invention.

Par souci de clarté, les mêmes références désignant les mêmes éléments d'un four à haute température sous ultravide selon l'état de l'art et selon l'invention sont utilisées pour toutes les figures 1 à 6A.

Dans l'ensemble de la présente demande, les termes « vertical », « inférieur », « supérieur », « bas », « haut », « dessous », « dessus », « hauteur » sont à comprendre par référence par rapport à un four selon l'invention avec son enceinte en configuration verticale de fonctionnement.

On précise que les différents éléments selon l'invention sont représentés uniquement par souci de clarté et qu'ils ne sont pas à l'échelle.

On précise également que les termes utilisés pour les brides CF sont ceux usuels utilisés pour le vide. Ainsi, les brides CF (également appelées brides ConFlat) sont des brides à couteau et à trous, sont réalisées en acier inoxydable 304 ou 316 et sont utilisées pour l'ultra vide. L'ensemble constitué d'un joint en cuivre pris en sandwich entre deux brides CF est fixé avec des écrous et boulons. Les tailles des brides CF sont indiquées par le diamètre nominal DN intérieur en millimètres. Les brides CF existent de 16 à 300 mm de diamètre en standard (DN16 CF, DN40 CF, DN63 CF, DN100 CF, DN160 CF, DN200 CF, DN250 CF, DN300 CF).

Les figures 1 à 3 relatives à des fours HT sous UHV selon l'état de l'art antérieur ont déjà été commentés en préambule. Elles ne sont donc pas détaillées ci-après.

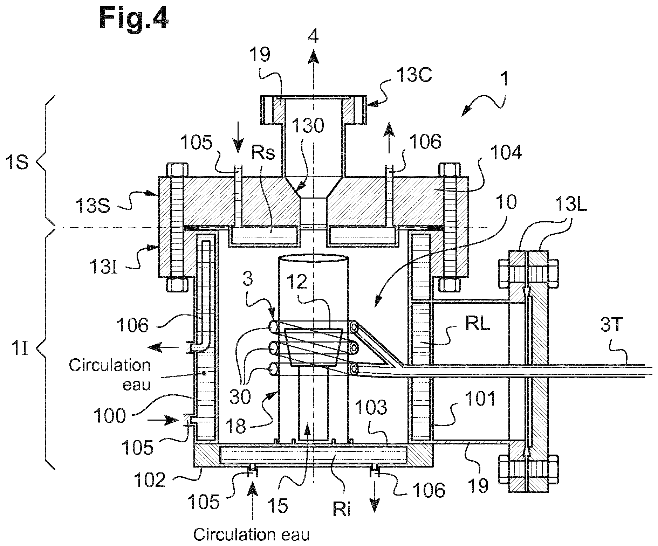

On décrit maintenant un four HT sous UHV selon l'invention tel qu'illustré en figures 4 à 6A.

Le four selon l'invention 1 comprend tout d'abord une enceinte métallique 10 et étanche aux gaz, délimitée un diamètre interne Di, une hauteur H et définissant un volume interne V. Dans l'exemple illustré, Di = 135 mm, H = 101 mm, et V ≈ 1450 cm³.

L'enceinte métallique 10 est constituée d'une partie supérieure 1S et d'une partie inférieure 1I assemblées entre elles par deux brides CF standards 13S, 13I entre lesquelles un joint en cuivre est intercalé pour assurer l'étanchéité vis à vis de l'atmosphère.

Une bride supérieure 13C permet de connecter l'intérieur de l'enceinte du four à une ligne de purification des gaz, non représentée par l'intermédiaire d'une tubulure 19. Dans l'exemple illustré, les brides 13S, 13I sont des brides DN 160 CF, la bride supérieure 13C est de type DN CF40 et le joint est de type OFHC (acronyme anglais pour « Oxygen Free High Conductivity »). Plus précisément, la bride supérieure 13C est percée en son centre par une ouverture de connexion 4 à une ligne de purification des gaz libérés dans l'enceinte. De préférence, l'ouverture de connexion 4 est reliée à une pièce de dérivation pour connecter la partie supérieure 1S de l'enceinte à la fois à la ligne de purification des gaz et à un carrousel de stockage en tant que dispositif d'amenée par gravité d'un échantillon.

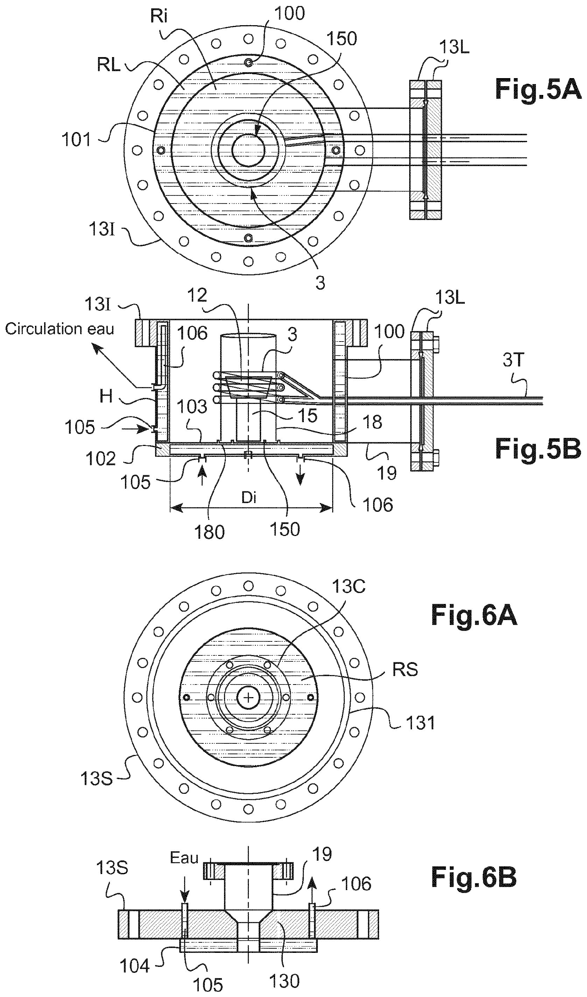

Comme illustré en figures 5 et 5A, la partie inférieure 1I de l'enceinte 10 comprend deux cylindres creux 100, 101 agencés de manière concentrique en étant soudés par leur extrémité supérieure à la bride de fixation 13I. Dans l'exemple illustré, les cylindres 100 et 101 sont de diamètre respectif 159 mm et 135 mm. La partie inférieure des cylindres 100, 101 est soudée sur un troisième cylindre 102 par l'intermédiaire d'une plaque circulaire 103 qui constitue la paroi interne inférieure de l'enceinte du four.

L'espacement entre les cylindres 100 et 101 permet une circulation d'eau afin d'éviter une surchauffe de ces parois latérales du four. L'arrivée d'eau dans ce circuit de refroidissement à eau RL est faite à l'aide d'un tube d'admission 105 tandis que l'optimisation du remplissage est obtenue par le tube de refoulement 106 soudé entre les deux cylindres 100 et 101.

Le troisième cylindre 102 est évidé en son centre pour permettre une seconde circulation d'eau pour refroidir la paroi interne inférieure 104 du four. L'arrivée d'eau dans ce circuit de refroidissement à eau Ri est faite à l'aide également entre un tube d'admission 105 et un tube de refoulement 106. Ces deux tubes peuvent être inversés car le sens de circulation de l'eau dans le cylindre 102 n'a pas d'importance.

Une première bride 13L à tubulure 19 est soudée sur le cylindre latéral externe 101 de l'enceinte. La tubulure 19 est soudée à la fois sur les cylindres 100 et 101 pour garantir une parfaite étanchéité de l'enceinte vis à vis de l'atmosphère et de la circulation d'eau. Une seconde bride 13L est fixée à la première 13L à tubulure avec l'interposition d'un joint en cuivre pour obtenir l'étanchéité de l'enceinte vis à vis de l'atmosphère. Dans l'exemple illustré, les brides 13L sont des brides DN 63 CF et le joint est de type OFHC.

La deuxième bride 13L est munie d'une traversée électrique 3T permettant le passage de signaux électriques HF (Haute Fréquence) destinés à alimenter la bobine d'induction 3, de préférence en cuivre, agencée dans l'enceinte. La traversée 3T est constituée de préférence de deux tubes en cuivre soudés sur des céramiques, elles-mêmes fixées de manière étanche sur la bride 13L.

La bobine d'induction 3 est soudée sur les deux tubes en cuivre de la traversée électrique 3T pour les signaux HF. De préférence, la bobine est agencée au centre de l'enceinte 10.

Un creuset métallique 12, qui est le siège du phénomène thermique par induction électromagnétique est posé sur un support isolant électrique 15, de préférence au centre de l'enceinte 10.

Le creuset 12 est de préférence en tantale, car outre le fait d'être un métal réfractaire avec une température de fusion élevée (3020°C), il a pour avantage de présenter un faible taux de dégazage de gaz rares d'origine atmosphérique. Toutefois, on peut envisager d'autres métaux pour le creuset 12 comme Mo, Pt, Fe, .... A titre d'exemple, il est envisagé de préférence le platine pour extraire l'azote des échantillons géologiques car le platine reste inerte chimiquement vis à vis de N₂, ce qui n'est pas le cas pour le tantale ou le molybdène.

Le support 15 est de préférence en céramique car c'est un matériau pur, dégazant peu, et résistant à la température, à de brèves variations de température, typiquement de l'ordre de 400°C par min. En outre, l'usinage de la céramique est aisé. Tout autre matériau non conducteur électrique peut également convenir, notamment le quartz.

Le nombre de spires 30 de la bobine d'induction est calculé en fonction de la géométrie du creuset 12 et de sa masse. La distance entre la bobine d'induction 3 et les parois internes latérale 101, inférieure 103 et supérieure 104 est avantageusement d'au moins 30 mm, afin de minimiser les effets de l'induction sur l'enceinte métallique 10.

De préférence, un guide de centrage 150 est usiné dans la paroi inférieure 103 pour positionner au mieux le support 15 au centre de l'enceinte. La hauteur du support 15 est calculée de manière à positionner le creuset 12 au centre des spires 30 de la bobine d'induction 3.

Un tube isolant électrique 18 est positionné entre les spires d'induction 30 et le creuset métallique 12. Le tube est de préférence en quartz car c'est un matériau qui résiste à la température. Tout autre tube en matériau non conducteur pourrait convenir, notamment un tube en vitrocéramique ou en carbone vitreux. Ce tube 18 est prévu pour permettre un nettoyage plus aisé de l'enceinte 10, car la plupart des espèces condensables vont se condenser sur la surface du tube 18 et non sur les parois de l'enceinte 10. Le tube 18 protège également efficacement la bobine d'induction 3 contre la condensation des espèces volatiles.

Avantageusement, l'extrémité supérieure du tube 18 est agencée au plus près de la paroi interne supérieure 104 de l'enceinte 10. Dans l'exemple illustré, la partie supérieure du tube 18 est à une distance de l'ordre de 2 à 3 mm de la paroi supérieure 104 de l'enceinte. Cette faible distance permet d'optimiser le phénomène de condensation des condensables sur le tube 18 et non sur les parois de l'enceinte. Le tube 18, de préférence en quartz, est peu coûteux, et pourra ainsi être changé en fonction de son encrassement.

De préférence, un guide de centrage 180 est usiné dans la paroi inférieure 103 pour positionner au mieux le tube 18 au centre de l'enceinte.

Comme illustré en figures 6 et 6A, la partie supérieure 1S de l'enceinte comprend une bride 13S sur laquelle la bride supérieure 13C à tubulure 19 a été soudée. Un cône 130 a été usiné dans la bride 13S, afin de guider au mieux les échantillons vers le creuset 12 lors de leur descente par gravité.

Un quatrième cylindre 104, constituant la paroi interne supérieure, a été soudé sur la bride 13S. Le cylindre 104 est évidé pour permettre une circulation d'eau. L'arrivée d'eau dans ce circuit de refroidissement à eau Rs est faite à l'aide également entre un tube d'admission 105 et un tube de refoulement 106.

Ces deux tubes peuvent être inversés car le sens de circulation de l'eau dans le cylindre 104 n'a pas d'importance. Ce circuit d'eau Rs doit permettre d'éviter une surchauffe de la partie supérieure 1S de l'enceinte du four. La bride 13C à tubulure 19 est percée intérieurement d'une ouverture de connexion 4 pour connecter l'enceinte du four soit à un carrousel porte-échantillons soit à une ligne de purification des gaz. L'ensemble est relié à un spectromètre de masse pour la mesure des gaz rares.

Toutes les brides de fixation 13S, 13I, 13L et 13C ainsi que les tubulures 19 et les cylindres 100, 101, 102, 103, 104, constituant l'enceinte métallique sont en acier inoxydable de type 304L et 316LN. Ces aciers ont été choisis avantageusement pour leur bonne soudabilité et leur très faible perméabilité à l'hélium. Leur tenue mécanique permet un étuvage de l'enceinte 10 à 300°C pour désorber les espèces chimiques adsorbées sur les parois internes de l'enceinte. Le matériau utilisé pour la bride latérale à tubulure 13L est de préférence en acier inoxydable amagnétique 316LN, afin de minimiser les effets parasites de l'induction sur les parois de la tubulure 19.

La température du creuset a été mesurée au travers d'une fenêtre en verre à l'aide d'un pyromètre optique commercialisé sous la dénomination « infratherm IS 8 plus » par la société Impac. Une calibration de la température a été obtenue en fonction des paramètres de chauffe d'un générateur de signaux HF alimentant la bobine d'induction 3 par la traversée 3T.

Comme déjà décrit, toutes les surfaces de l'enceinte métallique 10 du four, à savoir les surfaces latérale 101, inférieure 103 et supérieure 104, sont refroidies à l'aide d'un circuit d'eau, respectivement Ri, RL et Rs. Un tel refroidissement est particulièrement performant puisque ces surfaces restent froides malgré le chauffage prolongé du creuset 12 à 1850°C. On précise que dans l'exemple illustré, la tubulure 19 de la bride latérale 13L n'est pas munie d'un système de refroidissement par l'eau. Des ventilateurs extérieurs peuvent être utilisés pour limiter à 70°C la température à ce niveau.

Après son assemblage, et pour répondre aux normes de propreté exigées pour l'ultra-vide, l'enceinte a été nettoyée sous ultrasons dans trois bains successifs de détergent, de marque commerciale « Decon 90 » et d'un dernier à l'acétone ultra pur à 99%. Entre chaque bain, l'enceinte a été rincée à l'eau déminéralisée. Cette procédure de nettoyage permet d'éliminer 99,95% des hydrocarbures présents dans l'enceinte 10.

Les inventeurs ont procédé à plusieurs essais avec le four selon l'invention qui vient d'être décrit, de manière à valider son utilisation dans le laboratoire spécialisé dans lequel ils travaillent. Les essais sont résumés ci-après.

### Reproductibilité du chauffage

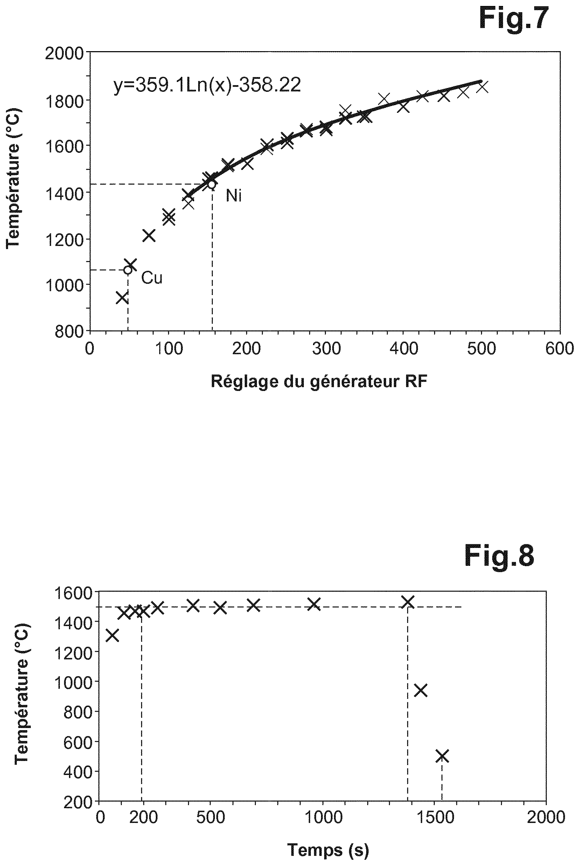

Le creuset a été monté trois fois à haute température. Ces trois cycles de chauffage ont été réalisés durant trois jours successifs. Toutes les mesures semblent cohérentes et indiquent une très bonne reproductibilité du chauffage. La figure 7 illustre les trois cycles de chauffage obtenus. De ces courbes, on constate qu'il est possible, à partir d'une équation logarithmique de prédire la température du creuset en fonction des réglages du générateur de signaux HF.

### Température maximale atteinte

Au cours de ces trois cycles de chauffage, une mesure à 1850°C a pu être effectuée avec le pyromètre optique, utilisé pour le calibrage, qui a été réglé pour l'émissivité du tantale.

Il est possible d'augmenter encore cette température extrême car le générateur de signaux HF n'était qu'à 40% de sa puissance maximale.

L'ouverture du four a été réalisée après chaque cycle de chauffage pour vérifier l'intégrité du four. Les inventeurs ont pu constater qu'aucune pièce à l'intérieur du four (creuset 12, support en céramique, bobine d'induction 3, tube en quartz) n'avait souffert de la température.

### Vérification des mesures

D'autres mesures de température ont été réalisées à l'aide du pyromètre optique.

La fusion de copeaux de cuivre et de nickel dans le creuset à des températures respectivement de 1060°C et 1435°C a été observée.

Ces mesures sont en accord avec les températures de fusion de ces deux métaux trouvées dans les tables : voir publication [31].

### Vitesse de chauffe et de refroidissement

Comme déjà décrit, le creuset en tantale 12 est chauffé par induction. Il repose sur un support en céramique pour limiter les pertes de température par conduction.

La figure 8 illustre les points de mesure de température en fonction du temps.

La courbe de montée en température est extrêmement rapide car seulement 200 secondes sont nécessaires pour stabiliser la température du creuset 12 à 1500°C.

Les inventeurs considèrent qu'il n'existe pas actuellement de four haute température sous UHV qui présente cette caractéristique.

Le creuset 12 se refroidit également très rapidement lorsque le générateur de signaux HF est éteint car, sa masse et donc son inertie thermique est faible. Typiquement la masse du creuset 12 n'excède pas 120g.

Comme cela ressort de la figure 8, une durée de 160 secondes seulement est nécessaire pour diminuer la température du creuset de 1500°C à une température inférieure à 500°C.

### Stabilité de la température

Les paramètres du générateur de signaux HF ont été choisis pour obtenir une température de 1500°C. La température, après 200 secondes s'est stabilisée et des mesures de celle-ci ont été effectuées pendant une durée d'environ 20 minutes.

La température moyenne au cours de ce test a été de 1499°C +/- 14°C.

Ce résultat semble indiquer que le four selon l'invention a une stabilité satisfaisante au cours d'un cycle de chauffe.

### Protocole de dégazage du four: Analyse du Néon.

Un protocole de dégazage du four a été mis au point pour obtenir des quantités résiduelles de néon (blanc) très faibles. Un blanc analytique représente la quantité de gaz dégazée par l'ensemble des parois internes d'une enceinte. Un faible dégazage de l'enceinte est la condition sine qua none pour analyser des échantillons pauvres en gaz.

Chaque analyse de blanc a été faite après 25 minutes de chauffage du creuset 12 sous vide statique afin de simuler une extraction de gaz.

| | Température (°C) (durée du dégazage | 20Ne (mole) |
|---|---|---|
| Dégazage | 1800 (1heure) | |
| Blanc du creuset | 1500 | 9.84x10⁻¹⁵ |
| Dégazage | 1800 (2heures) | |
| Blanc du creuset (n=1) | 1500 | 1.6x10⁻¹⁶ |
| Blanc du creuset (n=7) | 1500 | 5.82x10⁻¹⁷ |

Ce protocole a été mis au point après un étuvage de l'enceinte 10 du four selon l'invention à 160°C pendant 24 heures.

Le dégazage du creuset 12 est très efficace dans l'enceinte 10 du four.

Deux cycles de dégazage à 1800°C pendant 3 heures ont permis d'atteindre des blancs en néon très satisfaisants, à savoir 5.8x10⁻¹⁷ mole de ²⁰Ne dégazé par le creuset à 1500°C pendant 25 minutes. Cette valeur est tout à fait compatible pour pouvoir analyser des échantillons pauvres en néon.

Comme cela ressort du tableau 1 ci-après, la comparaison de ce résultat analytique du four selon l'invention avec d'autres systèmes d'extraction, issus de laboratoires de réputation mondiale, classe le four selon l'invention parmi les plus performants au monde.

On précise que dans les tableaux 1 et 2, les codes suivants sont utilisés pour préciser le type de système d'extraction des exemples comparatifs selon l'état de l'art :
- (A) : Four résistif à double paroi
- (B) : Four résistif à simple paroi
- (C) : Laser
- (D) : Four à induction à enceinte en verre

**TABLEAU 1**

| **Exemples** | **Type d'extraction** | **Température en °C** | **Nature du creuset** | **Blanc ²⁰Ne (x10⁻¹⁶mole)** |
|---|---|---|---|---|
| **Exemples comparatifs** | | | | |
| selon publication [9] | D | 1500 | - | 6.7 |
| selon publication [15] | D | 1500 | - | 6.69-11.15 |
| selon publication [16] | D | 1600 | Mo | 11.15 |
| selon publication [3] | A | 1500 | Ta | 4.5 |
| | | 1500 | Al₂O₃ | 22 |
| selon publication [10] | A | 1400 | Ta | 1.34-4.02 |
| selon publication [11] | A | 600-1500 | Ta | 1.75 |
| | | 600-1500 | Al₂O₃ | 26.29 |
| selon publication [12] | A | 1600 | MgO | 3.3 (moyenne) |
| | | 1600 | BN | 3.5 (moyenne) |
| | | 1600 | Mo | 4.5 (moyenne) |
| selon publication [17] | A | 1650 | Mo | 26.77 |
| selon publication [18] | A | 1750-1800 | - | 0.04 |
| selon la demande de brevet FR2973105 | B | 1150 | BN | 2.0 |
| | | 1250 | BN | 31 |
| Selon publication [13] | B | 2000 | W | 21.86 |
| Selon publication [14] | B | 2200 | Ta | 0.02-7.14 |
| Selon publication [30] | B | 1750 | | 2.01 |
| Selon publication [27] | C | | | 3.5-5 |
| Selon publication [29] | C | | | 0.11 |
| Selon publication [30] | C | | | 8.3 |
| **Four à induction selon l'invention** | | 1500 | Ta | 0.58 |

Il est tout à fait envisageable de pouvoir réduire encore ces blancs de néon en augmentant la température de dégazage du creuset à 1900°C par exemple.

### Protocole de dégazage du four: Analyse de l'hélium

Un protocole de dégazage du four a été mis au point pour obtenir des quantités résiduelles d'hélium (blanc) très faibles.

Un chauffage du four à 1830°C pendant 30 minutes sous pompage turbomoléculaire permet de réduire le dégazage du four à 1.4x10⁻¹⁵ mole d'⁴He. Ces quantités sont compatibles pour l'extraction de l'hélium dans des échantillons pauvres en gaz.

De ce tableau 2, on constate que par comparaison avec d'autres fours issus de laboratoires de réputation mondiale, le résultat analytique classe le four selon l'invention, parmi les plus performants au monde pour l'extraction de l'hélium.

**TABLEAU 2**

| **Exemples** | **Type d'extraction** | **Température °C** | **Durée d'extraction (min)** | **Blanc ⁴He (x10⁻¹⁵mole)** |
|---|---|---|---|---|
| **Exemples comparatifs** | | | | |
| selon publication [4] | D | 600 | 30 | 46 |
| | | 1800 | | 90 |
| selon publication [9] | D | 1500 | | 847.7 |
| selon publication [15] | D | 1500 | | 446-669 |
| selon publication [16] | D | 1600 | | 669 |
| selon publication [8] | A | 1650 | 30 | 66.92 |
| selon publication [17] | A | 1650 | 30 | 17.85 |
| selon publication [10] | A | 600-1700 | | 20.08 |
| selon publication [12] | A | 800 | 30 | 64.25 |
| | | 1600 | 30 | 66.03 |
| | | 600-800 | 20-30 | - |
| | | 1600 | 20-30 | 48.18 |
| | | 1800 | 30 | 154.81 |
| | | 800 | 20 | - |
| | | 1600 | 20-30 | 75.40 |
| | | 1800 | 20 | 130.72 |
| selon publication [19] | A | 1600 | | 8.80 |
| selon publication [20] | A | 300-1500 | | 2.23-5.80 |
| selon publication [21] | A | - | | 1.33-1.78 |
| selon publication [22] | A | 1700 | | 0.33 |
| selon la demande de brevet FR2973105 | B | 1450 | | 1.12 |
| selon publication [14] | B | 2200 | | 0.268-3.569 |
| selon publication [13] | B | 2000 | 10 | 133.845 |
| selon publication [23] | B | 1700 | | 0.997-3.156 |
| selon publication [24] | C | | | 0.067-0.152 |
| selon publication [25] | C | 1300 | | 3.322 |
| selon publication [26] | C | >1200 | | 0.216 |
| selon publication [27] | C | | | 2.3-26 |
| selon publication [28] | C | | | 6 |
| selon publication [29] | C | | | 11.154 |
| **Exemples de four à induction selon l'invention** | | | | |
| Exemple 1 | | 1750-1830 | 10 | 1.4 |

### Protocole de dégazage du four: Analyse du Xénon

Un protocole de dégazage du four a été mis au point pour obtenir des quantités résiduelles de xénon (blanc) très faibles.

Un chauffage du four à 1800°C pendant trois cycles de 30 minutes sous pompage turbomoléculaire permet de réduire le dégazage du four à 5.5x10⁻¹⁸ mole d'¹³²Xe. Ces quantités sont compatibles pour l'extraction du xénon dans des échantillons pauvres en gaz.

De ce tableau 3, on constate que par comparaison avec d'autres fours issus de laboratoires de réputation mondiale, le résultat analytique classe le four selon l'invention, à un niveau similaire pour l'extraction du xénon.

**TABLEAU 3**

| **Exemple** | **Type d'extraction** | **Température °C** | **Nature du creuset** | **Blanc 132Xe (x10⁻¹⁶)** |
|---|---|---|---|---|
| selon publication [15] | D | 1500 | - | 0.004-0.009 |
| selon publication [9] | D | 1500 | Mo | 0.005 |
| selon publication [32] | D | 1850 | Ta | 0.194 |
| selon publication [16] | D | 1600 | Mo | 0.107 |
| selon publication [11] | A | 600-1500 | Ta | 0.022 |
| selon publication [17] | A | 1650 | Mo | 0.223 |
| | | 1600 | MgO | 0.072 (moyenne) |
| | | 600-800 | BN | 0.020 (moyenne) |
| | | 1600 | BN | 0.045 (moyenne) |
| | | 1800 | BN | 0.052 (moyenne) |
| | | 1600 | Mo | 0.140 (moyenne) |
| | | 1800 | Mo | 0.058 (moyenne) |
| selon publication [33] | B | 2150 | Ta | 0.178 |
| selon publication [13] | B | 2000 | W | 0.004 |
| selon publication [13] | B | 2050 | - | 0.020 |
| **Exemples de four à induction selon l'invention** | | | | |
| **Exemple 1** | | | | 0.055 |

Au vu de ces résultats, et du fait d'une très bonne reproductibilité des tests et d'une excellent fiabilité du four selon l'invention (puissance de chauffe, vitesse de chauffe et de refroidissement), le laboratoire au sein duquel travaillent les inventeurs a décidé d'utiliser le four selon l'invention en routine au laboratoire pour extraire à la fois le néon, le xénon et l'hélium dans les minéraux (quartz, pyroxène, olivine, etc...).

En outre, les résultats obtenus aussi bien en blancs de néon, de xénon et d'hélium sont très encourageants et laissent penser aux inventeurs que les blancs en Ar et Kr peuvent être très faibles avec un four selon l'invention tel qu'il a été décrit.

D'autres variantes et améliorations peuvent être prévues sans pour autant sortir du cadre de l'invention.

L'invention n'est pas limitée aux exemples qui viennent d'être décrits ; on peut notamment combiner entre elles des caractéristiques des exemples illustrés au sein de variantes non illustrées.

### Références citées

[1] : Zimmermann L. et Marty B. «Méthodes d'extraction des gaz rares sous ultravide », Les techniques de l'ingénieur, J6632 (2014).
[2] : T Staudacher, E K Jessberger, D Dorflinger and J Kiko. « A refined ultrahigh-vacuum furnace for rare gas analysis ». Journal of Physics E: Scientific Instruments 1978, Volume 11, Number 8, 781-784.
[3] : Takaoka N. A low blank, Metal system for rare gas analysis. Mass spectrometry, 24, N°1, 73-86 (1976).
[4] : Marty B., Lenoble M. and Vassard N. « Nitrogen, helium and argon in basalt : A static mass spectrometry. » Chemical Geology (Isotope Geoscience Section), 120, 183-195(1995).
[5] : Chennaoui-Aoudjehane H., Modélisation de la solubilité des gaz rares He, Ne, Ar, Kr et Xe dans les liquides silicatés à 1500°C. Thèse 138 p. (1992)
[6]: Farley K.A., Reiners P.W., and Nenow V., « An apparatus for high-precision helium diffusion measurements from minerals », Anal. Chem., 71 2059-2061 (1999).
[7]: Humbert, F., Libourel, G., France-Lanord, C., Zimmermann, L., & Marty, B. « CO2-laser extraction-static mass spectrometry analysis of ultra-low concentrations of nitrogen in silicates. » Geostandards Newsletter, 24(2), 255-260(2000).
[8]: Foeken J.P.T., Stuart F.M., Dobson K.J., Persano C. and Vilbert D., A diode laser system for heating minerals for (U-Th)/He chronometry, Geochemistry, Geophysics, Geosystem, 7, N°4, 1-9 (2006)
[9]: Moreira M. and Allègre C.J. « Rare gas systematics on Mid AtlanticRidge (37-40°N) » Earth and Planetary Science Letters, 198, 401-416 (2002).
[10]: Niedermann S, Bach W. and Erzinger.J « Noble gas evidence for lower mantle component in MORBs fromthe Southern East Pacific Rise : Decoupling of helium and neon isotope systematics » Geochemica et Cosmochimica Acta, 61, 2697-2715 (1997).
[11]: Honda M., McDougallI., Patterson D.B., Doulgeris A. and Clague D.A. « Nobles gases in submarine pillow basalt glasses from Loihi and Kilauea, Hawaii : A solar component in the Earth ». Geochemica et Cosmochimica Acta, 57, 859-874 (1993).
[12]: Maruoka T. and Matsuda J. « New crucible for noble gas extraction » Chemical Geology, 175, 751-756 (2001).
[13] Honda M., Reynolds J.H., Roedder E. and Epstein S. Noble gases in diamonds: Occurrences of solarlike helium and neon. Journal of Geophysical Research, 92, N°B12, 12.507-12521 (1987)
[14] Sumino H., Dobrzhinetskaya L.F., Burgess R. and Kagi H. Deep-mantle-derived noble gases in metamorphic diamonds from the Kokchetav massif, Kazakhstan. Earth and Planetary Science Letters, 307, 439-449 (2011)
[15] Becker R.H. and Pepin R.O. The case for a martian origin of the shergottites: nitrogen and noble gases in EETA 79001. Earth and Planetary Science Letters, 69, 225-242 (1984)
[16] Ott U. Noble gases in SNC meteorites: Shergotty, Nakhla, Chassigny. Geochimica et Cosmochimica Acta, 52, 1937-1948 (1988)
[17]: Jambon, A., Weber, H., Braun, O. « Solubility of He, Ne, Ar, Kr and Xe in a basalt melt in the range 1250-1600°C: Geochemical implications ». Geochemica et Cosmochimica Acta 50, 401-408, (1986).
[18] Lavielle B., Marti K., Jeannot J.P., Nishiizumi K. and Caffee M. The 36Cl-36Ar-40K-41K records and cosmoc ray production rates in iron meteorites. Earth and Planetary Science Letters, 170, 93-104 (1999)
[19]: Blard, P.-H. and Pik, R. « An alternative isochron method for measuring cosmogenic 3He in lava flows. » Chemical Geology, 251 (1-4). pp. 20-32. ISSN 0009-2541. (2008).
[20]: Aciego S.M., Depaolo D.J., Kennedy B.M., Lamb M.P., Sims K.W.W. and Dietrich W.E. « Combining 3He cosmogenic dating with U-Th/He eruption ages using olivine in basalt ». Earth and Planetary Science Letters, 254, 288-302 (2007).
[21] : Kurz M. In situ production of terrestrial cosmogenic helium and some application to geochronology. Geochimica et Cosmochimica Acta, 50, 2855-2862 (1986)
[22] : Williams A.J., Stuart F.M., Day S.J. and Phillips W.M. Using pyroxene microphenocrysts to determine cosmogenic 3He concentrations in old volcanic rocks; an example of landscape development in central Gran Canaria. Quaternary Science Reviews, 24, 211-222 (2005)
[23] : Blard P.H., Pik R., Lavé J., Bourlès D., Burnard P.G., Yokochi R., Marty B. and Trusdell. Cosmogenic 3He prodution rates revisited fom evidences of grain size dependent release of matrix-sited helium. Earth and Planetary Science Letters, 247, 222-234 (2006)
[24] : Ammon K., Dunai T.J., Stuart F.M., Meriaux A.-S. and Gayer E. Cosmogenic 3He exposure ages and geochemistry of basalts from Ascension Island, Atlantic Ocean. Quaternary Geochronology, 4, 525-532 (2009)
[25] : Farley K.A., Libarkin J., Mukhopadhyay S. and Amidon W. Cosmogenic and nucleogenic 3He in apatite, titanite, and zircon. Earth and Planetary Science Letters, 248, 451-461 (2006)
[26] : Foeken J.P.T., Day S. and Stuart F.M. Cosmogenic 3He exposure dating of the quaternary basalt from Fogo, Cape Verdes: Implications for tift zone and magmatic reorganisation. Quaternary Geochronology, 4, 37-49 (2009)
[27] : Füri E., Aléon-Toppani A., Marty B. and Libourel G. Effects of atmospheric entry heating on the noble gas and nitrogen content of micrometeorites. Earth and Planetary Science Letters, 377-378, 1-12 (2013)
[28] : Pi T., Solé J. and Taran Y. (U-Th)/He dating of fluorite: application to the La Azul fluorspar deposit in the Taxco mining district, Mexico. Mineralium Deposita, 39, 976-982 (2005)
[29] : Nichols R. H. Jr., Hohenberg C.M. and Olinger C.T. Implanted solar helium, neon, and argon in individual lunar ilmenite grains: Surface effects and a temporal variation in the solar wind composition. Geochimica et Cosmochimica Acta, 58, 1031-1042 (1994)
[30] : Vermeesch P., Balco G., Blard P. H., Dunai T. J., Kober F., Niedermann S., Shuster D. L., Strasky S., Stuart F. M., Wieler R. and Zimmermann L. Interlaboratory comparaison ofcosmogenic 21Ne in quartz. Quaternary Geochronology, 26, 20-28 (2015)
[31] : CRC Handbook of Chemistry and Physics, 97th Edition.
[32] : Pujol M. Géochimie des éléments volatils dans les roches archéennes: caractérisation des environnements anciens. Thèse XXXp (2009)
[33] : Burgess R., Cartigny P., Harrison D., Hobson E. and Harris J. Volatile composition of microinclusions in diamonds from the panda kimberlite, Canada: Implications for chemical and isotopic heterogeneity in the mantle. Geochimica et Cosmochimica Acta, 73, 1779-1794 (2009)
[34] : Johnson L.H., Burgess R., Turner G., Milledge H.J. and Harris J.W. Noble gas and halogen geochemistry of mantle fluids: Comparison of african and canadian diamonds. Geochimica et Cosmochimica Acta, 64, 717-732 (2000)

## Revendications

1. Four (1) à haute température sous ultravide, destiné à l'extraction de gaz rares présents dans des échantillons de minéraux et/ou de roches, comprenant :
- une enceinte métallique (10) et étanche notamment aux gaz atmosphériques, comprenant une ouverture de connexion à une ligne de purification des gaz libérés dans l'enceinte (10) et/ou à un dispositif d'amenée par gravité d'un échantillon et, une ouverture de connexion (4) à une pompe adaptée pour créer l'ultravide à l'intérieur de l'enceinte (10),
- un creuset (12) en matériau électriquement conducteur, adapté pour contenir au moins un échantillon de minéraux et/ou de roches,
- un support (15) en matériau isolant électrique, en appui sur la partie inférieure de l'enceinte métallique (10), et supportant le creuset (12) dans l'enceinte (10),
- au moins une bobine d'induction (3, 30), alimentée électriquement depuis l'extérieur de l'enceinte (10) par au moins une traversée isolée (3T) traversant une paroi (100, 101) de l'enceinte (10), et agencée dans l'enceinte (10) autour du creuset (12),
- un tube (18) en matériau isolant électrique, en appui sur la partie inférieure de l'enceinte métallique (10), agencé entre la bobine d'induction (3, 30) et le creuset (12) supporté par le support (15).

2. Four à haute température sous ultravide selon la revendication 1, comprenant un circuit de refroidissement à fluide caloporteur (Rs, Ri, RL) intégré dans les parois latérale (100, 101), inférieure (102, 103) et supérieure (104) de l'enceinte (10).

3. Four à haute température sous ultravide selon la revendication 1 ou 2, l'enceinte métallique (10) étant constituée de cylindres assemblés entre eux par soudure et brides de fixation.

4. Four à haute température sous ultravide selon la revendication 3, les cylindres et brides de fixation étant en acier inoxydable, de préférence respectivement de type 304L et 316LN.

5. Four à haute température sous ultravide selon l'une des revendications précédentes, la distance entre la bobine d'induction (3,30) et chacune des parois internes inférieure (103), supérieure (104) et latérale (101) étant au moins égale à 10 mm.

6. Four à haute température sous ultravide selon l'une des revendications précédentes, le creuset conducteur (12) étant en un matériau choisi parmi le tantale (Ta), le molybdène (Mo), le platine (Pt), le fer (Fe).

7. Four à haute température sous ultravide selon l'une des revendications précédentes, le support isolant électrique (15) étant en un matériau choisi parmi une céramique, le quartz.

8. Four à haute température sous ultravide selon l'une des revendications précédentes, le tube isolant électrique (18) étant en un matériau choisi parmi le quartz, la vitrocéramique, le carbone vitreux.

9. Four à haute température sous ultravide selon l'une des revendications précédentes, l'ouverture de connexion étant reliée à une pièce de dérivation pour connecter la partie supérieure de l'enceinte (10) à la fois à la ligne de purification des gaz et à un carrousel de stockage en tant que dispositif d'amenée par gravité d'un échantillon.

10. Four à haute température sous ultravide selon l'une des revendications précédentes, l'extrémité inférieure du support isolant électrique (15) étant logée dans un guide de centrage (150) réalisé dans la paroi interne inférieure (103) de l'enceinte (10).

11. Four à haute température sous ultravide selon l'une des revendications précédentes, l'extrémité inférieure du tube isolant électrique (18) étant logée dans un guide de centrage (180) réalisé dans la paroi interne inférieure (103) de l'enceinte (10).

12. Four à haute température sous ultravide selon l'une des revendications précédentes, l'extrémité supérieure du tube isolant électrique (18) étant agencée au plus près de la paroi interne supérieure (104) de l'enceinte (10).

## Patentansprüche

1. Ultrahochvakuum-Hochtemperaturofen (1), der zum Extrahieren der in Mineralien- und/oder Gesteinsproben vorkommenden Edelgase bestimmt ist, umfassend:
- eine metallische und insbesondere gegenüber atmosphärischen Gasen dichte Kammer (10), umfassend eine Verbindungsöffnung zu einer Anlage zur Reinigung der in der Kammer (10) freigesetzten Gase und/oder zu einer Vorrichtung zur Zuführung einer Probe per Schwerkraft und eine Verbindungsöffnung (4) zu einer Pumpe, die dazu angepasst ist, das Ultrahochvakuum im Inneren der Kammer (10) zu erzeugen,
- einen Tiegel (12) aus elektrisch leitendem Material, der dazu angepasst ist, mindestens eine Mineralien- und/oder Gesteinsprobe zu enthalten,
- einen Träger (15) aus elektrisch isolierendem Material, der auf dem unteren Teil der metallischen Kammer (10) aufliegt und den Tiegel (12) in der Kammer (10) trägt,
- mindestens eine Induktionsspule (3, 30), die von außerhalb der Kammer (10) durch mindestens eine isolierte Durchführung (3T) elektrisch versorgt wird, die eine Wand (100, 101) der Kammer (10) durchquert, und die in der Kammer (10) um den Tiegel (12) herum angeordnet ist,
- ein Rohr (18) aus elektrisch isolierendem Material, das auf dem unteren Teil der metallischen Kammer (10) aufliegt und zwischen der Induktionsspule (3, 30) und dem von dem Träger (15) getragenen Tiegel (12) angeordnet ist.

2. Ultrahochvakuum-Hochtemperaturofen nach Anspruch 1, umfassend einen Kühlkreis mit Wärmeträgerfluid (Rs, Ri, RL), der in die seitlichen (100, 101), unteren (102, 103) und oberen (104) Wände der Kammer (10) integriert ist.

3. Ultrahochvakuum-Hochtemperaturofen nach Anspruch 1 oder 2, wobei die metallische Kammer (10) aus Zylindern besteht, die durch Schweißen und Befestigungsflansche zusammengefügt sind.

4. Ultrahochvakuum-Hochtemperaturofen nach Anspruch 3, wobei die Zylinder und Befestigungsflansche aus nichtrostendem Stahl sind, bevorzugt vom Typ 304L beziehungsweise 316LN.

5. Ultrahochvakuum-Hochtemperaturofen nach einem der vorhergehenden Ansprüche, wobei der Abstand zwischen der Induktionsspule (3,30) und jeder der unteren (103), oberen (104) und seitlichen (101) Innenwände mindestens 10 mm beträgt.

6. Ultrahochvakuum-Hochtemperaturofen nach einem der vorhergehenden Ansprüche, wobei der leitende Tiegel (12) aus einem Material ist, das aus Tantal (Ta), Molybdän (Mo), Platin (Pt), Eisen (Fe) gewählt ist.

7. Ultrahochvakuum-Hochtemperaturofen nach einem der vorhergehenden Ansprüche, wobei der elektrisch isolierende Träger (15) aus einem Material ist, das aus einer Keramik, Quarz gewählt ist.

8. Ultrahochvakuum-Hochtemperaturofen nach einem der vorhergehenden Ansprüche, wobei das elektrisch isolierende Rohr (18) aus einem Material ist, das aus Quarz, einer Glaskeramik, Glaskohlenstoff gewählt ist.

9. Ultrahochvakuum-Hochtemperaturofen nach einem der vorhergehenden Ansprüche, wobei die Verbindungsöffnung mit einem Abzweigteil verbunden ist, um den oberen Teil der Kammer (10) sowohl mit der Anlage zum Reinigen der Gase als auch mit einem Lagerkarussell als Vorrichtung zum Zuführen einer Probe per Schwerkraft zu verbinden.

10. Ultrahochvakuum-Hochtemperaturofen nach einem der vorhergehenden Ansprüche, wobei das untere Ende des elektrisch isolierenden Trägers (15) in einer Zentrierungsführung (150) aufgenommen ist, die in der unteren Innenwand (103) der Kammer (10) ausgeführt ist.

11. Ultrahochvakuum-Hochtemperaturofen nach einem der vorhergehenden Ansprüche, wobei das untere Ende des elektrisch isolierenden Rohrs (18) in einer Zentrierungsführung (180) aufgenommen ist, die in der unteren Innenwand (103) der Kammer (10) ausgeführt ist.

12. Ultrahochvakuum-Hochtemperaturofen nach einem der vorhergehenden Ansprüche, wobei das obere Ende des elektrisch isolierenden Rohrs (18) so nah wie möglich an der oberen Innenwand (104) der Kammer (10) angeordnet ist.

## Claims

1. High-temperature ultrahigh-vacuum furnace (1), intended for the extraction of noble gases present in samples of minerals and/or rocks, comprising:
- a metal chamber (10) that is gastight, in particular to atmospheric gases, comprising a connection opening for connecting to a purification line for purifying the gases released in the chamber (10) and/or to a gravity feed device for supplying a sample and, a connection opening (4) for connecting to a pump suitable for creating the ultrahigh vacuum inside the chamber (10),
- a crucible (12) made of electrically conductive material, suitable for containing at least one sample of minerals and/or rocks,
- a support (15) made of electrically insulating material, resting on the lower portion of the metal chamber (10), and supporting the crucible (12) in the chamber (10),
- at least one induction coil (3, 30), powered from outside of the chamber (10) through at least one insulated bushing (3T) passing through a wall (100, 101) of the chamber (10), and arranged in the chamber (10) around the crucible (12),
- a tube (18) made of electrically insulating material, resting on the lower portion of the metal chamber (10), arranged between the induction coil (3, 30) and the crucible (12) supported by the support (15).

2. High-temperature ultrahigh-vacuum furnace according to Claim 1, comprising a heat-transfer fluid cooling circuit (Rs, Ri, RL) integrated into the lateral (100, 101), lower (102, 103) and upper (104) walls of the chamber (10).

3. High-temperature ultrahigh-vacuum furnace according to Claim 1 or 2, the metal chamber (10) consisting of cylinders assembled together by welding and fastening flanges.

4. High-temperature ultrahigh-vacuum furnace according to Claim 3, the cylinders and fastening flanges being made of stainless steel, preferably of 304L and 316LN type respectively.

5. High-temperature ultrahigh-vacuum furnace according to one of the preceding claims, the distance between the induction coil (3, 30) and each of the lower (103), upper (104) and lateral (101) inner walls being at least equal to 10 mm.

6. High-temperature ultrahigh-vacuum furnace according to one of the preceding claims, the conductive crucible (12) being made of a material selected from tantalum (Ta), molybdenum (Mo), platinum (Pt), iron (Fe).

7. High-temperature ultrahigh-vacuum furnace according to one of the preceding claims, the electrically insulating support (15) being made of a material selected from a ceramic, quartz.

8. High-temperature ultrahigh-vacuum furnace according to one of the preceding claims, the electrically insulating tube (18) being made of a material selected from quartz, glass-ceramic, vitreous carbon.

9. High-temperature ultrahigh-vacuum furnace according to one of the preceding claims, the connection opening being connected to a bypass part for connecting the upper portion of the chamber (10) both to the gas purification line and to a storage carousel as a gravity feed device for supplying a sample.

10. High-temperature ultrahigh-vacuum furnace according to one of the preceding claims, the lower end of the electrically insulating support (15) being housed in a centring guide (150) made in the lower inner wall (103) of the chamber (10).

11. High-temperature ultrahigh-vacuum furnace according to one of the preceding claims, the lower end of the electrically insulating tube (18) being housed in a centring guide (180) made in the lower inner wall (103) of the chamber (10).

12. High-temperature ultrahigh-vacuum furnace according to one of the preceding claims, the upper end of the electrically insulating tube (18) being arranged as close as possible to the upper inner wall (104) of the chamber (10).
